# EUROPÄISCHE PATENTSCHRIFT

(11) **EP 1 704 041 B1**
(45) Veröffentlichungstag und Bekanntmachung des Hinweises auf die Patenterteilung: **01.08.2007**
(21) Anmeldenummer: 04803639.6
(22) Anmeldetag: 08.12.2004
(51) Int. Cl.: B29C 51/26, B29C 51/32

(54) **VORRICHTUNG UND VERFAHREN ZUR HERSTELLUNG EINES FORMTEILS**
DEVICE AND METHOD FOR PRODUCING A SHAPED PART
DISPOSITIF ET PROCEDE POUR PRODUIRE UNE PIECE FAÇONNEE

(30) Priorität: 09.12.2003 DE 10357386
(43) Veröffentlichungstag der Anmeldung: 27.09.2006
(73) Patentinhaber: PEGUFORM GMBH, 79268 Bötzingen (DE)
(72) Erfinder: VENDANGEOT, Francis, 68000 Colmar (FR)
(74) Vertreter: Neunert, Peter Andreas
(86) Internationale Anmeldenummer: PCT/EP2004/013971
(87) Internationale Veröffentlichungsnummer: WO 2005/058584

(56) Entgegenhaltungen:
- DE-A1- 4 008 221
- DE-A1- 4 419 908
- JP-A- 48 089 973
- PATENT ABSTRACTS OF JAPAN Bd. 2000, Nr. 23, 10. Februar 2001 (2001-02-10) -& JP 2001 162679 A (ARACO CORP), 19. Juni 2001 (2001-06-19)

## Beschreibung

Die Erfindung betrifft eine Vorrichtung zur Herstellung eines Formteils gemäß dem Oberbegriff des Patentanspruchs 1 sowie ein Verfahren zur Herstellung eines Formteils gemäß dem Oberbegriff des Patentanspruchs 10.

Aus der DE 44 19 908 C2 ist eine Vorrichtung zur Herstellung eines Formteils, bestehend aus einer unteren Pressform, einer darüber angeordneten Zwischenform mit Durchgangsöffnung sowie aus einem Stempel bekannt, der durch die Durchgangsöffnung in Richtung Pressform bewegbar ist. Die Pressform weist einen Boden auf, welcher von einem gegenüber diesem erhöhten Randbereich mit einer Umlaufkante umgeben ist. Die Umlaufkante verläuft in einer Horizontalebene.

Bei der bekannten Vorrichtung wird ein Kaschierwerkstoff zwischen Pressform und Zwischenform eingelegt. Daraufhin wird die Pressform in Richtung Zwischenform verfahren, so dass der Kaschierwerkstoff zwischen Zwischenform und Randbereich der Pressform geklemmt wird. Als nächster Schritt wird ein Trägerteilwerkstoff in die Zwischenform eingelegt. Der Stempel wird in Richtung Durchgangsöffnung der Zwischenform nach unten verfahren, wobei der Trägerteilwerkstoff zwischen Stempel und Zwischenform geschnitten wird. Der Trägerteilwerkstoff und der Kaschierungswerkstoff werden zwischen dem Boden der Pressform und dem Stempel verpresst. Als letzter Verfahrensschritt wird die Dekorschicht mittels eines seitlich der Pressform angeordneten Messers durchtrennt.

Der Erfindung liegt die Aufgabe zugrunde, eine vereinfachte Vorrichtung sowie ein vereinfachtes Verfahren zur Herstellung eines Formteils vorzuschlagen.

Diese Aufgabe wird vorrichtungsgemäß durch die Merkmale des Anspruchs 1 und verfahrensgemäß durch die Merkmale des Anspruchs 10 gelöst.

Vorteilhafte Ausgestaltungen der Erfindung sind in den Unteransprüchen angegeben.

Der Erfindung liegt der Gedanke zugrunde bei der Herstellung eines Formteils, bestehend aus Verbundmaterial und einer Dekorschicht, mit nur einem Stempel in einer einzigen Vorrichtung sowohl das Verbundmaterial zu beschneiden, als auch die Dekorschicht selektiv zu beschneiden. Der resultierende Überstand der Dekorschicht kann in einem späteren Schritt um das Verbundmaterial umgebogen werden. Die den Boden der Pressform begrenzende Umlaufkante des Randbereichs der Pressform weist mindestens zwei in Umlaufrichtung nebeneinander angeordnete Abschnitte auf, wobei jeder Abschnitt in einer Horizontalebene verläuft und wobei die Horizontalebenen voneinander beabstandet sind. Nach Durchtrennen des Verbundmaterials zwischen Stempel und Zwischenform wird der Stempel weiter in Richtung Pressform bewegt. Selbstverständlich ist auch eine Bewegung der Pressform in Richtung Stempel denkbar. Dabei wird die Dekorschicht zwischen dem in der oberen Horizontalebene verlaufenden Abschnitt der Umlaufkante der Pressform und der Stempelkante durchtrennt. An den übrigen Abschnitten der Umlaufkante erfolgt keine Durchtrennung. Aufgrund der erfindungsgemäßen Vorrichtung und des erfindungsgemäßen Verfahrens kann auf ein separates Schneidmesser zum selektiven Beschneiden der Dekorschicht verzichtet werden.

Um zu verhindern, dass der Stempel nach Durchtrennen der Dekorschicht zwischen dem höhergelegenen Abschnitt der Umlaufkante und dem Stempel weiter nach unten in Richtung Boden der Pressform und damit in Richtung tiefer gelegenem Abschnitt der Umlaufkante verfahren wird, sind erfindungsgemäß Mittel zum Stoppen der Abwärtsbewegung des Stempels vor Erreichen der unteren Horizontalebene der Umlaufkante vorgesehen. Somit wird ein Beschneiden der Dekorschicht entlang der gesamten Umlaufkante des Stempels mit Vorteil vermieden.

Um einen umlaufenden Beschnitt des Verbundmaterials zu ermöglichen, ist mit Vorteil vorgesehen, dass die horizontale Querschnittsfläche der Durchgangsöffnung der Zwischenform der horizontalen Querschnittsfläche des Stempels zuzüglich eines Spiels entspricht. Der Beschnitt erfolgt zwischen einer die Durchgangsöffnung begrenzenden Umlaufkante sowie einer Stempelkante. In Ausgestaltung der Erfindung ist vorgesehen, dass zusätzlich oder alternativ die von der Umlaufkante umrandete Horizontalfläche der Pressform der horizontalen Querschnittsfläche des Stempels zuzüglich eines Spiels entspricht. Die von der Umlaufkante umrandete Horizontalfläche der Pressform entspricht dabei der Projektionsfläche des Bodens der Pressform.

Damit bei geschlossenen Formhälften (Stempel und Pressform) nur ein geringer Druck von insbesondere 20 bar auf das Verbundmaterial aufgebracht wird, ist mit Vorteil vorgesehen, dass auf der Unterseite des Stempels eine Ausnehmung zur Aufnahme des Verbundmaterials eingebracht ist. Dies ist insbesondere deshalb wichtig, da als Verbundmaterial vorzugsweise Verbundmaterial bestehend aus einer insbesondere wabenförmigen Kernschicht mit mindestens einseitiger Verstärkungsschicht verwendet wird, das nicht beschädigt werden soll. Ein weiterer Vorteil des geringen Pressdrucks besteht darin, dass auch die Dekorschicht nicht beschädigt wird. Auch Fehler wie Abdrücke in der Dekorschicht können aufgrund der erfindungsgemäßen Vorrichtung vermieden werden, wenn für die Dekorschicht ein Material mit ausreichender Steifigkeit gewählt wird. Die Ausnehmung ist von einem erhöhten Randbereich umgeben, wobei der Randbereich eine umlaufende Aussenkante und eine umlaufende Innenkante aufweist, wobei die Innenkante die Ausnehmung in der Unterseite des Stempels begrenzt und die Aussenkante die Stempelkante bildet.

In Ausgestaltung der Erfindung ist mit Vorteil vorgesehen, dass die Pressform ortsfest angeordnet ist und die Zwischenform heb- und senkbar ausgebildet ist. Selbstverständlich ist es denkbar, die Pressform in Richtung Zwischenform zu bewegen, oder beide Bauteile aufeinander zuzubewegen. Die bevorzugte Ausführungsform mit feststehender Pressform ist jedoch konstruktiv einfacher zu realisieren.

Damit der Stempel und/oder die Zwischenform und/oder die Pressform vertikal verfahrbar sind, ist mit Vorteil eine hydraulische Hebe- und Absenkeinrichtung hierfür vorgesehen. Dabei ist es mit der Hebe- und Absenkvorrichtung möglich, den Stempel und/oder die Zwischenform und/oder die Pressform in mehreren Zwischenpositionen anzuhalten.

Wenn beispielsweise das Verbundmaterial rechteckförmig beschnitten werden soll, so ist die Querschnittsfläche des Stempels sowie die Durchgangsöffnung rechteckig ausgebildet. Um die Dekorschicht entsprechend beschneiden zu können, weist auch die Umlaufkante der Pressform einen rechteckförmigen Verlauf auf. Je nachdem, wie viele Seiten der Dekorschicht beschnitten werden sollen, sind eine, zwei oder drei Seiten der Umlaufkante gegenüber der bzw. den übrigen Seiten der rechteckförmigen Umlaufkante erhöht ausgebildet, verlaufen also in einer oberen Horizontalebene. Das Beschneiden der Dekorschicht findet lediglich zwischen der oder den höher gelegenen Seiten der rechteckförmigen Umlaufkante und der äußeren Umlaufkante des Stempels statt.

Gemäß dem erfindungsgemäßen Verfahren wird zunächst eine Dekorschicht über die Pressform gespannt und die Dekorschicht zwischen Pressform und Zwischenform geklemmt. Gemäß einem weiteren Verfahrensschritt wird das Verbundmaterial auf oder in der Zwischenform positioniert. Der Stempel wird auf das Verbundmaterial abgesenkt, wodurch sich das Verbundmaterial in Richtung Dekorschicht bewegt und wobei das Verbundmaterial in der Zwischenform in den Randbereichen eine Formgebung durchläuft. Hierzu weist die Zwischenform eine in Richtung Durchgangsöffnung verlaufende umlaufende Einlaufschräge auf, die einen spitzen Winkel zur vertikalen aufweist. Der Neigungswinkel kann je nach verwendetem Verbundmaterial unterschiedlich gewählt werden. Bei weiterem Annähern des Verbundmaterials an die Dekorschicht durch weiteres Absenken des Stempels wird schließlich der Randbereich des Verbundmaterials von einem Kernbereich an der Umlaufkante der Durchgangsöffnung abgetrennt. Durch weiteres Absenken des Stempels wird die zwischen Zwischenform und Pressform geklemmte Dekorschicht entlang eines Umfangsabschnitts der Stempelkante geschnitten. Das Beschneiden erfolgt zwischen einem Umfangsabschnitt der Stempelkante und einem in einer oberen Horizontalebene gelegenen Abschnitt einer den Boden bzw. die Bodenvertiefung der Pressform begrenzenden Umlaufkante.

Nach dem selektiven Beschnitt der Dekorschicht wird die Abwärtsbewegung des Stempels gestoppt, um zu vermeiden, dass die Dekorschicht entlang der gesamten Umlaufkante des Stempels durchtrennt wird. In seiner tiefsten Position wird die Dekorschicht von dem Umfangsabschnitt der Stempelkante, der die Dekorschicht nicht durchtrennt hat, nicht berührt.

Auf das Verbundmaterial wird, zumindest im Bereich einer Ausnehmung im Stempel, ein maximaler Druck von 20 bar aufgebracht, um das Verbundmaterial und/oder die Dekorschicht nicht zu beschädigen.

Gemäß einer besonders vorteilhaften Ausgestaltung des Verfahrens wird ein Verbundmaterial verwendet, das eine Schicht mit zellenartigem Aufbau aufweist, wobei zumindest auf einer Seite der Schicht, vorzugsweise auf zwei gegenüberliegenden Seiten, eine Verstärkungsschicht vorgesehen ist.

Gemäß einer vorteilhaften Ausgestaltung der Erfindung ist vorgesehen, dass als Verstärkungsschicht und/oder Kernschicht thermoplastisches Material verwendet wird, wobei insbesondere das gesamte Verbundmaterial vor dessen Positionierung, insbesondere auf 170° bis 180°, erhitzt wird. Durch das darauffolgende Pressen auf die Dekorschicht wird eine feste Verbindung zwischen Dekorschicht und Verstärkungsschicht des Verbundmaterial hergestellt. Somit kann auf Klebstoffe oder weitere Verbindungskomponenten mit Vorteil verzichtet werden.

In Ausgestaltung der Erfindung ist mit Vorteil vorgesehen, dass das Verbundmaterial eine Schicht aufweist, die eine Wabenstruktur, eine Schaumstruktur oder eine Gitterstruktur aufweist. Dies hat den Vorteil einer Gewichtsreduktion. Es ist möglich, dünnwandige Formteile mit elastischen Eigenschaften herzustellen.

Das beschriebene, mit der Vorrichtung und dem Verfahren herstellbare Formteil bestehend aus Verbundmaterial und mindestens einer Dekorschicht stellte eine eigene, unabhängige Erfindung dar. Mit Vorteil besteht der zellenartige Aufbau des Kernmaterials aus einer Wabenstruktur. Diese Wabenstruktur übernimmt auch die Funktion eines Gerippes, um den Abstand der Verstärkungsschichten festzulegen.

Anhand der Zeichnung, die ein Ausführungsbeispiel der erfindungsgemäßen Vorrichtung sowie eines mit der Vorrichtung hergestellten Formteils zeigt, wird die Erfindung näher beschrieben.

Dabei zeigen:
- Fig. 1a - Fig. 1e: schematische Schnittdarstellungen der Vorrichtung bei unterschiedlichen Ver-Fahrensschritten,
- Fig. 2a: einen Schnitt durch ein Formteil, welches mit der Vorrichtung nach den Fig. 1a-1e hergestellt wurde und
- Fig. 2b: eine perspektivische Ansicht eines Bauteils nach Fig. 2a.

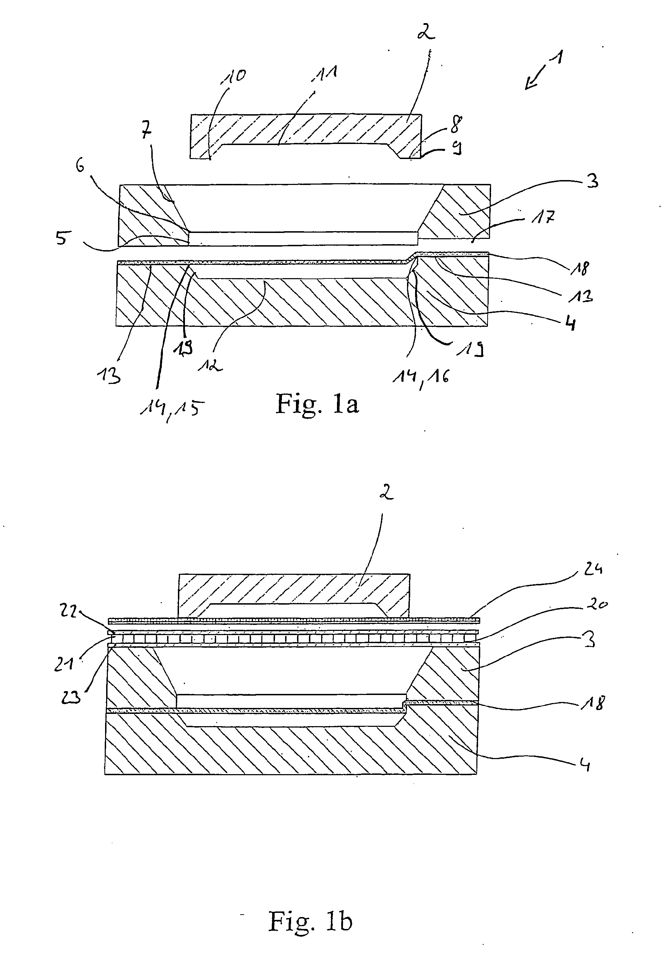

In Fig. 1a ist die Vorrichtung 1 in einem geöffneten Zustand dargestellt. Dabei sind ein Stempel 2, eine Zwischenform 3 und eine untere Pressform 4 mit Vertikalabstand zueinander angeordnet. Die Zwischenform 3 weist eine Durchgangsöffnung 5 auf, durch die der Stempel 2 in Richtung Pressform 4 bewegbar ist. Die horizontale Querschnittsfläche der Durchgangsöffnung 5 entspricht der horizontalen Querschnittsfläche des Stempels 2 zuzüglich eines Spiels. Die Durchgangsöffnung 5 wird von einer oberen Umlaufkante 6 begrenzt. Weiterhin weist die Zwischenform eine umlaufende Einlaufschräge 7 auf, die in einem spitzen Winkel zur Vertikalen verläuft.

Der Stempel 2 weist auf seiner Unterseite einen umlaufenden Randbereich 8 auf, welcher eine umlaufende Stempelkante 9 (Außenkante des Randbereichs 8) und eine umlaufende Innenkante 10 aufweist. Die Innenkante 10 begrenzt eine Ausnehmung 11 in der Unterseite des Stempels 2.

Die ortsfeste, untere Pressform 4 weist einen Boden 12 auf, welcher von einem gegenüber diesem erhöhten Randbereich 13 umgeben ist. Bei dem Boden 12 handelt es sich anders ausgedrückt um eine Vertiefung in der Oberseite der Pressform 4. Der Randbereich 13 weist eine den Boden 12 begrenzende Umlaufkante 14 auf. Die Umlaufkante 14 besteht aus zwei in Umlaufrichtung nebeneinander angeordneten Abschnitten 15, 16, die in vertikal voneinander beabstandeten Horizontalebenen verlaufen. Der obere Abschnitt 16 der Umlaufkante 14 ist gegenüber dem unteren Abschnitt 15 der Umlaufkante 14 erhöht. Hierdurch ist auch der Randbereich 13 in der rechten Zeichnungshälfte gegenüber dem Randbereich 13 in der linken Zeichnungshälfte erhöht. Entsprechend weist die Zwischenform 3 in dem oberhalb des erhöhten Randabschnitts gelegenen Bereich eine Aussparung 17 auf, um die Erhöhung auszugleichen, damit die Zwischenform 3 horizontal auf der Pressform 4 aufliegen und dabei eine Dekorschicht 18 über den gesamten Umfang des Randbereichs 13 klemmen kann.

Der Boden 12 hat einen im Wesentlichen horizontalen Verlauf mit schräg ansteigenden Bodenseitenwänden 19. Die von der Umlaufkante 14 des Bodens 12 umrandete Horizontalfläche entspricht der Querschnittsfläche des Stempels 2 zuzüglich eines Spiels.

Dadurch, dass der Abschnitt 16 der Umlaufkante 14 gegenüber dem Abschnitt 15 der Umlaufkante 14 erhöht ist, verläuft die Dekorschicht 18 nicht exakt horizontal. Die verwendete Dekorschicht 18 besteht aus einem biegeschlaffen Material, welches sich zunächst nur in unmittelbarer Nähe des Abschnittes 16 der Kante 14 verformt.

Nachdem die Dekorschicht 18, wie in Figur 1a gezeigt, zwischen die Zwischenform 3 und die Pressform 4 eingelegt wurde, wird die Zwischenform 3 auf die Pressform 4 bewegt, wodurch die Dekorschicht 18 zwischen den beiden Bauteilen im Bereich des Randabschnitts 13 geklemmt wird.

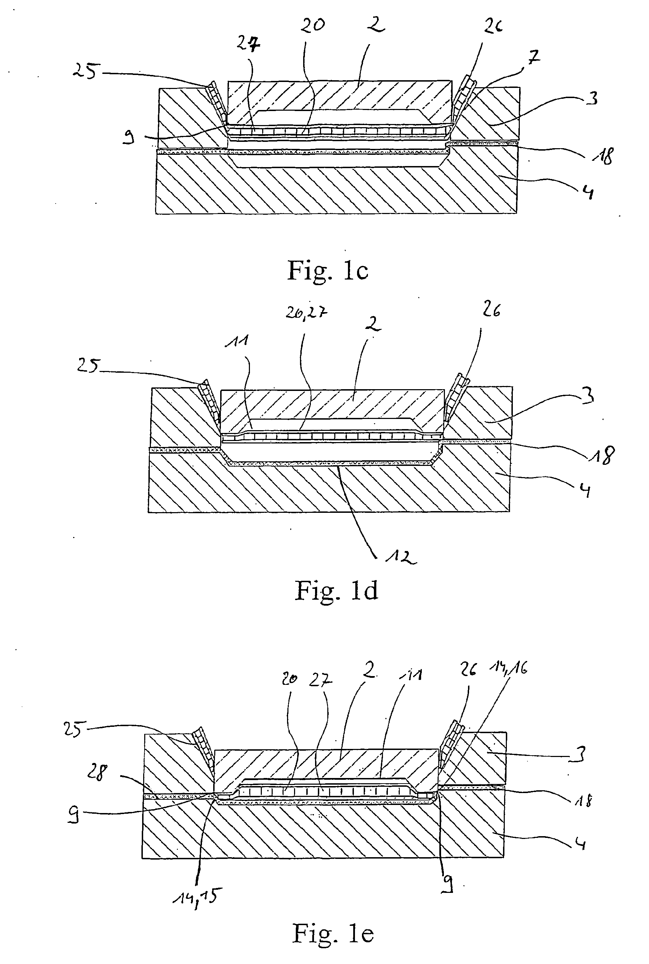

In einem in Figur 1b dargestellten Verfahrensschritt wurde ein Verbundmaterial 20 auf die Zwischenform 3 aufgelegt. Das Verbundmaterial 20 besteht aus einer wabenförmigen Kernschicht 21, die auf beiden Seiten von einer Verstärkungsschicht 22, 23 umgeben ist. Die beiden Verstärkungsschichten 22, 23 bestehen aus thermoplastischem Material: Das gesamte Verbundmaterial 20 wurde vor dem Auflegen auf die Zwischenform 3 auf etwa 175° erhitzt. Auf das Verbundmaterial 20 wurde eine Vliesschicht 24 aufgelegt. Diese Vliesschicht 24, bei der es sich auch um eine weitere Dekorschicht handeln kann, wird, wie in Figur 1c dargestellt, zusammen mit dem Verbundmaterial 20 von dem Stempel 2 bei dessen Abwärtsbewegung in Richtung Pressform 4 erfasst und in die Zwischenform 3 verschoben. Die Vliesschicht 24 wird dabei letztendlich von der Umlaufkante 9 des Stempels 2 an der Umlaufkante 6 der Durchgangsöffnung 5 vollständig durchtrennt.

Bei der Abwärtsbewegung des Stempels 2 wird, wie in Fig. 1c dargestellt, das Verbundmaterial 20 an seinen Randbereichen 25, 26 verpresst. Es durchläuft also eine Formgebung. Da die Einlaufschräge 7 einen spitzen Winkel zur Vertikalen aufweist, erfolgt zunächst eine Verklemmung des Verbundmaterials 20. Ein Kernbereich 27 des Verbundmaterials 20 bleibt dabei im Wesentlichen horizontal ausgerichtet, weil durch die Klemmwirkung eine Zentrierung des Kernbereiches 27 erfolgt. Somit ist gewährleistet, dass der Kernbereich 27 des Verbundmaterials 20 immer annähernd parallel zur Dekorschicht 18 verläuft. Der Neigungswinkel der Einlaufschräge 7 kann je nach Anwendungsfall unterschiedlich gestaltet werden. Bei dem in Fig. 1c dargestellten Verfahrensschritt werden die Randbereiche 25, 26 von dem Kernbereich 27 entlang der Umlaufkante 9 des Stempels abgetrennt.

In Fig. 1d ist zu erkennen, dass sich die Dekorschicht 18 an den Boden 12 der Pressform 4 anlegt. Dazu wird die Dekorschicht 18 entweder von einer nicht dargestellten Saugeinrichtung angesaugt, oder es entsteht durch den sich absenkenden Stempel 2 ein Überdruck zwischen dem Verbundmaterial 20 und der Dekorschicht 18, so dass die Dekorschicht 18 an den Boden 12 der Pressform 4 anlegt. Nicht dargestellt ist eine Variante, nach welcher sich die Dekorschicht 18 auf die Unterseite des Kernbereichs 27 des Verbundmaterials 4 anlegt und mit fortschreitender Absenkung des Stempels 2 geringfügig vorgespannt wird und somit eine Blasenbildung zwischen Dekorschicht 18 und Verbundmaterial 20 ausgeschlossen werden kann.

In Fig. 1d ist zu erkennen, wie der von den Randbereichen 25, 26 abgetrennte Kernbereich 27 des Verbundmaterials 20 weiter nach unten in Richtung Pressform 4 bewegt wird.

Fig. 1e zeigt einen weiteren Verfahrensschritt zur Herstellung des Kunststoffformteils aus Verbundmaterial 20 und mindestens einer einseitig damit verbundenen Dekorschicht 18. Der Stempel 2 wird gegenüber der in Figur 1d dargestellten Position noch weiter abgesenkt. Dabei nimmt die mittige Ausnehmung 11 in der Unterseite des Stempels 2 den größten Teil des Kernbereichs 27 des Verbundmaterials 20 auf. Der aufgenommene Bereich wird somit nur geringfügigen Pressdrücken ausgesetzt. Hierdurch ist gewährleistet, dass die Struktur des Verbundmaterials im Kernbereich zumindest weitgehend erhalten bleibt, insbesondere wenn die Kernschicht 21 des Verbundmaterials 20 aus Schaumstoff besteht, oder eine Wabenstruktur aufweist. Die Dekorschicht 18 wird zwischen dem oberen Abschnitt 16 der Umlaufkante 14 der Pressform 4 und der umlaufenden Stempelkante 9 durchtrennt. Die Stempelkante 9 berührt die Dekorschicht 18 im Bereich des unteren Abschnitts 15 der Umlaufkante 14 der Pressform 4 nicht. Der Stempel 2 wird mittels eines nicht dargestellten mechanischen Anschlags gestoppt, bevor die Umlaufkante 9 den unteren Abschnitt 15 der Umlaufkante 14 erreicht. Somit wird die Dekorschicht 18 selektiv, nur im Bereich des höher gelegenen Abschnittes 16 der Umlauf kante 14 durchgeschnitten. Das Verbundmaterial 27 wird vom Stempel 2 an die Dekorschicht 18 angedrückt. Da zumindest die Verstärkungsschicht 23 aus thermoplastischem Material besteht und das Verbundmaterial vorher erhitzt wurde, entsteht somit eine feste Verbindung zwischen Verbundmaterial 20 und Dekorschicht 18, ohne dass zusätzliche Haftvermittlerschichten, wie Klebstoff, verwendet werden müssen. Der Druck zwischen dem Randbereich 8 des Stempels 2 und dem Boden 12 der Pressform auf das Verbundmaterial ist wesentlich höher, als der Druck in dem von der Ausnehmung 11 aufgenommenen Bereich des Kernbereichs 27 des Verbundmaterials 20.

In einem nicht dargestellten, nächsten Verfahrensschritt kann mit dem nicht abgetrennten Bereich 28 der Dekorschicht 18 ein Umbug um das Verbundmaterial hergestellt werden. Dabei kann je nach Anwendungsfall das Verbundmaterial 20 vollkommen, oder nur teilweise mit dem Bereich 28 umhüllt werden.

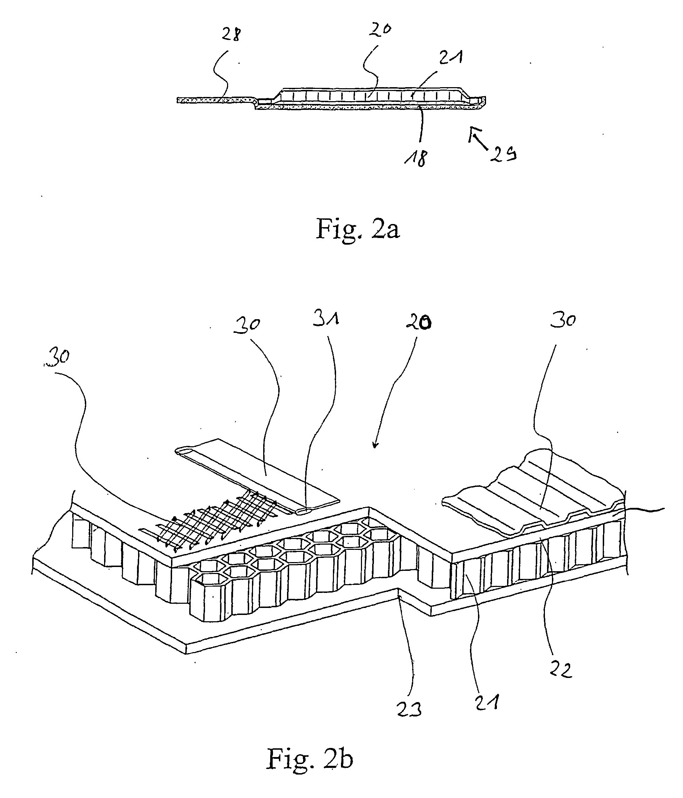

Mit der beschriebenen Vorrichtung 1 und dem mit der Vorrichtung ausgeführten Verfahren wird ein in Figur 2a dargestelltes Formteil 29 hergestellt. Das in den Figuren 2a und 2b dargestellte Verbundmaterial 20 wird aus Gründen der Gewichtsreduktion eingesetzt. Trotz der in der Kernschicht 21 vorhandenen Hohlräumen, Aussparungen oder Zellen ist es möglich, ein Leichtbauteil mit hoher Steifigkeit herzustellen. Die Werte für die Steifigkeit werden im Wesentlichen durch die Materialeigenschaften der die Kernschicht 21 begrenzenden Verstärkungsschichten 22 und 23 bestimmt. Aus diesem Grund besteht das Verbundmaterial 20 aus mindestens einer Schicht 21, die einen wesentlichen Anteil von Hohlräumen aufweist. Diese sogenannte Kernschicht 21 wird dann von Verstärkungsschichten 22, 23 aus Kunststoffmaterial umgeben, wobei das Kunststoffmaterial zusätzlich durch Fasermaterial verstärkt sein kann. Würde die Kernschicht 21 aus demselben Kunststoffmaterial wie die Verstärkungsschichten 22, 23 ausgebildet werden, und keine Hohlräume enthalten, so hätte das Verbundmaterial um ein bis zu 40% höheres Gewicht. Da die von der Kernschicht 21 eingenommenen mittleren Querschnittsabschnitte kaum zur Biegesteifigkeit beitragen, werden diese Querschnittsbereiche soweit möglich durch eine Schicht mit einer Struktur aus vielen Hohlräumen, Aussparungen oder Zellen ersetzt. Mit dieser Maßnahme wird die Biegesteifigkeit nur unwesentlich verringert, da die Randbereiche aus faserverstärktem Kunststoff die Hauptlast bei Beanspruchung auf Biegung tragen. Allerdings ist die Stabilität gegenüber den Druckkräften, welche auf die Oberfläche wirken, vermindert. Daher werden derartige Verbundbauteile unter möglichst geringem Druck bei einer Temperatur, bei welcher es zum Erweichen der Schichten kommt, in dem beschriebenen Pressverfahren hergestellt.

In einem ersten Ausführungsbeispiel weist das Verbundmaterial 20 eine Sandwichstruktur auf, welche vorzugsweise aus einem wabenförmigen Material als Kernschicht 21 besteht und mindestens eine Verstärkungsschicht 22, 23 zu jeder Seite aufweist.

Dadurch, dass die Sandwichstruktur großflächig nicht mehr durch den hohen Druck in Mitleidenschaft gezogen wird, bleibt die Steifigkeit des Materials erhalten, weil die Vorteile eines Sandwichmaterials mit Wabenkern voll umfänglich ausgenutzt werden können. Der Wabenkern kann aus Kunststoff, beispielsweise einem thermoplastischen Kunststoff, wie Polypropylen, bestehen, was insbesondere dann von Vorteil ist, wenn in der Pressform nicht ein ebenes, sondern ein beliebig gestaltetes dreidimensionales Formteil hergestellt werden soll. Der thermoplastische Kunststoff erlaubt es, Wölbungen und dergleichen auszuformen, wodurch das Verfahren nicht nur auf ebene Formteile beschränkt ist, sondern auf beliebig gekrümmte Formteile ausgedehnt werden kann. Für im Wesentlichen ebene Formteile können auch duroplastische Kunststoffe oder Papier als Wabenkern eingesetzt werden.

Die Kernschicht 21 besteht beispielsweise aus Polypropylen und die Verstärkungsschichten 22, 23 aus einem faserverstärkten Polypropylen.

Es ist auch denkbar, dass die Kernschicht 21 aus expandiertem Polypropylen oder aus einem Schaummaterial mit oder ohne Verstärkungsrippen besteht. Die Verwendung eines geschäumten Kernmaterials erfüllt die Forderungen nach Leichtbauweise, bietet die Möglichkeit, je nach Schaumdichte verschiedenste Verhältnisse von Bauteilvolumen zu Bauteilgewicht zu realisieren und ermöglicht eine recyclinggerechte Materialauswahl, da die Kernschicht 21 sowie die Verstärkungsschichten 22, 23 fast ausschließlich aus Polypropylen hergestellt werden können und somit ein Monomaterialkonzept realisiert werden kann.

Wenn ein Monomaterialkonzept nicht gewünscht wird, ist es auch möglich, verschiedenste Materialien mit unterschiedlichen Schmelzpunkten zu kombinieren. Das Verfahren bietet die Möglichkeit, verschiedene Kunststoffmaterialien, oder auch Hybridbauteile (d.h. Kunststoff-Metall-Verbundteile) zu kombinieren, um Formteile herzustellen. Zudem können thermisch weniger beständige, aber leichte und kostengünstige Kernschichten aus Papier oder Karton vorgesehen werden, die neben der Gewichtseinsparung auch eine Kosteneinsparung bedeuten.

Zudem ist eine Vielfalt von Materialien für die Verstärkung einsetzbar: Z.B. Naturfaser, PP-Faser, Glasfaser oder andere Verstärkungsfasern. Die Verstärkung soll 50 % des Grundmaterials nicht überschreiten, um eine ausreichende Fließfähigkeit des Materials zu gewährleisten. Für die Verstärkung kommen im Prinzip dieselben thermoplastischen Kunststoffe, wie für den Wabenkern zum Einsatz, allerdings ist es auch möglich, eine Faserverstärkung mit vorzusehen, bei welcher die Verstärkung aus einer Matte und einem gesprühten Polyhuräthan besteht. Eine andere Möglichkeit besteht darin, einen duroplastischen Kunststoff, wie beispielsweise Polyhuräthan, gemeinsam mit geschnittenen Glasfasern zu extrudieren und so eine kombinierte Verstärkungsschicht aus duroplastischem Kunststoff und Glasfasern in einem Stück herzustellen.

Zudem können Dekorschichten auf den Oberflächen der Verstärkungsteile vorgesehen werden. Die Beschichtung kann als Lack, als Film oder als Formhaut ausgebildet. sein, die bei ausreichender Druckbeständigkeit zusammen mit dem Sandwichmaterial verpresst wird oder ggf. in einem nachträglichen Bearbeitungsschritt aufgetragen werden kann.

Die Verwendung von Dekorschichten, die eine Struktur aufweisen, beispielsweise Stoffe (30), Vliese (30), Matten (30) und dergleichen zu dekorativen Zwecken ist möglich. Diese Strukturen können auch abschnittsweise vorgesehen werden, um verschiedene Dekorschichten zu kombinieren. Falls unbedingt notwendig, kann die Dekorschicht auch mittels einer Haftvermittlerschicht 31 aufgebracht werden. Dies ist jedoch aufgrund des erfindungsgemäßen Verfahrens nicht unbedingt notwendig.

Deckschichten, wie beispielsweise Vliese, machen Verformungsbewegungen mit. Vliese haben eine unregelmäßige Faserstruktur, wobei die Fasern gegeneinander beweglich sind. Diese Beweglichkeit kann dazu benutzt werden, die Vliesschicht 24 mit dem Verbundmaterial 20 zu verformen. Auch dreidimensionale Formteile lassen sich mit einer derartigen Vliesschicht herstellen. Da eine Vliesschicht im Allgemeinen die Oberflächenrauhigkeit erhöht, ist es auch möglich, diese Schicht mit einer Lackschicht zu tränken oder mit einer Folie zu verkleben.

### Bezugszeichenliste

- 1: Vorrichtung
- 2: Stempel
- 3: Zwischenform
- 4: Pressform
- 5: Durchgangsöffnung
- 6: Umlaufkante
- 7: Einlaufschräge
- 8: Randbereich
- 9: Stempelkante
- 10: Innenkante
- 11: Ausnehmung
- 12: Boden
- 13: Randbereich
- 14: Umlaufkante
- 15: Unterer Abschnitt der Umlaufkante
- 16: Oberer Abschnitt der Umlaufkante
- 17: Aussparung
- 18: Dekorschicht
- 19: Bodenseitenwände
- 20: Verbundmaterial
- 21: Kernschicht
- 22: Verstärkungsschicht
- 23: Verstärkungsschicht
- 24: Vliesschicht
- 25: Randbereich
- 26: Randbereich
- 27: Kernbereich
- 28: Bereich
- 29: Formteil
- 30: Gewebestruktur
- 31: Haftvermittlerschicht

## Patentansprüche

1. Vorrichtung zur Herstellung eines Formteils, mit einer Pressform die einen Boden aufweist, welcher von einem gegenüber diesem erhöhten Randbereich mit einer Umlaufkante umgeben ist, mit einer über der Pressform angeordneten Zwischenform mit einer Durchgangsöffnung, wobei die Zwischenform und die Pressform relativ zueinander bewegbar sind, und mit einem Stempel, wobei der Stempel durch die Durchgangsöffnung in Richtung Pressform bewegbar ist,
**dadurch gekennzeichnet, dass** die Umlaufkante (14) zwei in Umlaufrichtung nebeneinander angeordnete Abschnitte (15, 16) aufweist, die in vertikal voneinander beabstandeten Horizontalebenen verlaufen.

2. Vorrichtung nach Anspruch 1,
**dadurch gekennzeichnet, dass** Mittel zum Stoppen der Abwärtsbewegung des Stempels (2) vor Erreichen der unteren Horizontalebene der Umlaufkante (14) vorgesehen sind.

3. Vorrichtung nach Anspruch 2,
**dadurch gekennzeichnet, dass** die Mittel als mechanischer Anschlag für den Stempel (2) ausgebildet sind.

4. Vorrichtung nach einem der vorhergehenden Ansprüche,
**dadurch gekennzeichnet, dass** die horizontale Querschnittsfläche der Durchgangsöffnung (5) und/oder die von der Umlaufkante (14) umrandete Horizontalfläche des Pressform (4) der horizontalen Querschnittfläche des Stempels (2) zuzüglich eines Spiels entspricht.

5. Vorrichtung nach einem der vorhergehenden Ansprüche,
**dadurch gekennzeichnet, dass** der Stempel (2) auf der Unterseite einen umlaufenden Randbereich (8) mit einer umlaufenden Außenkante (Stempelkante 9) und einer umlaufenden Innenkante (10) aufweist, wobei die Innenkante (10) eine Ausnehmung (11) in der Unterseite des Stempels (2) begrenzt.

6. Vorrichtung nach einem der vorhergehenden Ansprüche,
**dadurch gekennzeichnet, dass** die Pressform (4) ortsfest angeordnet ist und die Zwischenform (3) heb- und senkbar ausgebildet ist.

7. Vorrichtung nach einem der vorhergehenden Ansprüche,
**dadurch gekennzeichnet, dass** der Stempel (2) und/oder die Zwischenform (3) über eine hydraulische Hebe- und Absenkeinrichtung verfügt.

8. Vorrichtung nach einem der vorhergehenden Ansprüche,
**dadurch gekennzeichnet, dass** der Stempel (2) und /oder die Zwischenform (3) in mehreren Zwischenpositionen angehalten werden kann.

9. Vorrichtung nach einem der vorhergehenden Ansprüche,
**dadurch gekennzeichnet, dass** die Umlaufkante (14) einen in der Draufsicht rechteckfömigen Verlauf aufweist, wobei eine, zwei oder drei Seiten der Umlaufkante gegenüber den bzw. der übrigen Seite der Umlaufkante erhöht ist.

10. Verfahren zur Herstellung eines Formteils, mindestens bestehend aus einem Verbundteil und einer Dekorschicht, insbesondere mit einer Vorrichtung nach einem der vorhergehenden Ansprüche, mit folgenden Schritten:
• Spannen der Dekorschicht über die Pressform
• Positionieren des Verbundmaterials auf oder in der Zwischenform
• Absenken eines Stempels auf das Verbundmaterial, wobei das Verbundmaterial in Richtung Dekorschicht bewegt wird, und wobei das Verbundmaterial in der Zwischenform in Randbereichen eine Formgebung durchläuft
• weiteres Annähern des Verbundmaterials an die Dekorschicht durch weiteres Absenken des Stempels bei gleichzeitigem Abtrennen der Randbereiche des Verbundmaterials von einem Kernbereich in der Zwischenform
**gekennzeichnet, durch**
• weiteres Absenken des Stempels (2) und dabei Durchtrennen der Dekorschicht (18) lediglich entlang eines Umfangsabschnitts der Stempelkante (9).

11. Verfahren nach Anspruch 10,
**dadurch gekennzeichnet, dass** das Durchtrennen der Dekorschicht (18) zwischen einem Umfangsabschnitt der Stempelkante (9) und einem oberen Umlaufkantenabschnitts (16) einer Pressform erfolgt.

12. Verfahren nach einem der Ansprüche 10 oder 11,
**dadurch gekennzeichnet, dass** die Abwärtsbewegung des Stempels (2) gestoppt wird, bevor die Dekorschicht (18) entlang der gesamten Umlaufkante (9) des Stempels (2) durchtrennt wird.

13. Verfahren nach einem der Ansprüche 10 bis 12,
**dadurch gekennzeichnet, dass** die Dekorschicht (18) von dem Umfangsabschnitt der Stempelkante (9), der die Dekorschicht (18) nicht durchtrennt, nicht berührt wird.

14. Verfahren nach einem der Ansprüche 10 bis 13,
**dadurch gekennzeichnet, dass**, zumindest unterhalb einer Ausnehmung (11) im Stempel (2), maximal ein Druck von 20 bar auf das Verbundmaterial (20) aufgebracht wird.

15. Verfahren nach einem der Ansprüche 10 bis 14,
**dadurch gekennzeichnet, dass** vor Absenken des Stempel (2) eine Vliesschicht (24) oder eine Dekorschicht auf das Verbundmaterial aufgelegt wird.

16. Verfahren nach einem der Ansprüche 10 bis 15,
**dadurch gekennzeichnet, dass** ein Verbundmaterial (20) verwendet wird, dass eine Kernschicht (21) mit einem zellenartigen Aufbau aufweist, wobei zumindest auf einer Seite der Kernschicht, vorzugsweise auf zwei gegenüberliegenden Seiten, eine Verstärkungsschicht (22, 23) vorgesehen ist.

17. Verfahren nach einem der Ansprüche 10 bis 16,
**dadurch gekennzeichnet, dass** für die Verstärkungsschicht (22, 23) und/oder Kernschicht (21) thermoplastisches Material verwendet wird, dass vor der Positionierung, insbesondere auf etwa 170°C bis 180°C, erhitzt wird.

18. Verfahren nach einem der Ansprüche 10 bis 17,
**dadurch gekennzeichnet, dass** der seitlich über das Verbundmaterial (20) überstehende Teil (28) der Dekorschicht (18) zumindest teilweise um das Verbundmaterial (20) umgebogen wird.

19. Verfahren nach einem der Ansprüche 10 bis 18,
**dadurch gekennzeichnet, dass** eine Kernschicht (21) verwendet wird, die eine Wabenstruktur, eine Schaumstruktur oder eine Gitterstruktur aufweist.

## Claims

1. A device for producing a shaped part, having a compression mould having a base surrounded by an edge region, with a circumferential edge, that is higher than said base,
having an intermediate mould, with a through-aperture, disposed above the compression mould, the intermediate mould and the compression mould being movable relative to each other,
and having a punch, the punch being movable through the through-aperture towards the compression mould,
**characterised in that** the circumferential edge (14) comprises two sections (15, 16) that are disposed next to each other in the circumferential direction and extend in vertically spaced-apart horizontal planes.

2. A device according to Claim 1,
**characterised in that** means are provided for stopping the downward movement of the punch (2) before it reaches the lower horizontal plane of the circumferential edge (14).

3. A device according to Claim 2,
**characterised in that** the means are constructed as a mechanical stop for the punch (2).

4. A device according to one of the preceding Claims,
**characterised in that** the horizontal cross-sectional surface of the through-aperture (5) and/or the horizontal surface of the compression mould (4) edged by the circumferential edge (13) corresponds to the horizontal cross-sectional surface of the punch (2) plus a clearance.

5. A device according to one of the preceding Claims,
**characterised in that** the underside of the punch (2) has a circumferential edge region (9) with a circumferential outer edge (punch edge 9) and a circumferential inner edge (10), the inner edge (10) limiting a recess (11) in the under side of the punch (2).

6. A device according to one of the preceding Claims,
**characterised in that** the compression mould (4) is disposed in fixed manner and the intermediate mould (3) is designed to be raised and lowered.

7. A device according to one of the preceding Claims,
**characterised in that** the punch (2) and/or the intermediate mould (3) have/has a hydraulic lifting and lowering mechanism.

8. A device according to one of the preceding Claims,
**characterised in that** the punch (2) and/or the intermediate mould (3) can be stopped in several intermediate positions.

9. A device according to one of the preceding Claims,
**characterised in that** the circumferential edge (14) has a rectangular shape in top view, with one, two or three sides of the circumferential edge being raised compared to the remaining side or sides of the circumferential edge.

10. A method for producing a shaped part, at least consisting of a composite part and a decorative layer, in particular using a device according to one of the preceding claims, said method including the following steps:
■ clamping the decorative layer over the compression mould
■ positioning the composite material on or in the intermediate mould
■ lowering a punch onto the composite material, whereby the composite material is moved towards the decorative layer, and whereby the composite material in the intermediate mould undergoes shaping in edge regions
■ moving the composite material closer to the decorative layer by further lowering the punch with the simultaneous separation of the edge regions of the composite material from a core region in the intermediate mould
**characterised by**
■ lowering the punch (2) further and thereby cutting through the decorative layer (18) just along a circumferential section of the punch edge (9).

11. A method according to Claim 10,
**characterised in that** the separation of the decorative layer (18) is performed between a circumferential section of the punch edge (9) and an upper circumferential section (16) of a compression mould.

12. A method according to one of Claims 10 or 11,
**characterised in that** the downward movement of the punch (2) is stopped before the decorative layer (18) is cut through (19) along the entire circumferential edge (9) of the punch (2).

13. A method according to one of Claims 10 to 12,
**characterised in that** the decorative layer (18) is not touched by the circumferential section of the punch edge (9), which does not cut through the decorative layer (18).

14. A method according to one of Claims 10 to 13,
**characterised in that** a maximum pressure of 20 bars is applied to the composite material (20), at least beneath a recess (11) in the punch (2).

15. A method according to one of Claims 10 to 14,
**characterised in that** prior to lowering the punch (2) a non-woven layer (24) or a decorative layer is laid onto the composite material.

16. A method according to one of Claims 10 to 15,
**characterised in that** a composite material (20) having a core layer (21) with a cellular structure is used, with a reinforcing layer (22, 23) being provided at least on one side of the core layer, preferably on two opposite sides.

17. A method according to one of Claims 10 to 16,
**characterised in that** thermoplastic material that is heated before being positioned, in particular to roughly 170° to 180°, is used for the reinforcing layer (22, 23) and/or core layer (21).

18. A method according to one of Claims 10 to 17,
**characterised in that** the part (28) of the decorative layer (18) that laterally overhangs the composite material (20) is bent at least to some extent around the composite material (20).

19. A method according to one of Claims 10 to 18,
**characterised in that** a core layer (21) is used, which has a honeycomb structure, a foam structure or a lattice structure.

## Revendications

1. Dispositif de fabrication d'une pièce moulée comportant un moule présentant un fond, entouré d'une zone marginale surélevée par rapport à celui-ci et ayant une arête périphérique, un moule intermédiaire disposé au-dessus du moule et ayant une ouverture de passage, le moule intermédiaire et le moule étant mobiles l'un par rapport à l'autre, et un poinçon, le poinçon étant mobile à travers l'ouverture de passage en direction du moule,
**caractérisé en ce que**
l'arête périphérique (14) présente deux segments (15, 16) juxtaposés dans le sens périphérique, et sur des plans horizontaux écartés verticalement l'un de l'autre.

2. Dispositif selon la revendication 1,
**caractérisé en ce que**
des moyens permettent d'arrêter le mouvement descendant du poinçon (2) avant l'atteinte du plan horizontal inférieur de l'arête périphérique (14).

3. Dispositif selon la revendication 2,
**caractérisé en ce que**
les moyens sont en forme de butée mécanique pour le poinçon (2).

4. Dispositif selon l'une quelconque des revendications précédentes,
**caractérisé en ce que**
l'aire de section horizontale de l'ouverture de passage (5) et/ou la surface horizontale du moule (4), entourée par l'arête périphérique (14), correspond à l'aire de section horizontale du poinçon (2) plus un jeu.

5. Dispositif selon l'une quelconque des revendications précédentes,
**caractérisé en ce que**
le poinçon (2) présente, sur le dessous, une zone marginale périphérique (8) ayant une arête extérieure périphérique (arête du poinçon 9) et une arête intérieure périphérique (10), l'arête intérieure (10) délimitant un évidement (11) dans le dessous du poinçon (2).

6. Dispositif selon l'une quelconque des revendications précédentes,
**caractérisé en ce que**
le moule (4) est fixe et le moule intermédiaire (3) peut être levé et abaissé.

7. Dispositif selon l'une quelconque des revendications précédentes,
**caractérisé en ce que**
le poinçon (2) et/ou le moule intermédiaire (3) dispose d'un dispositif de levage et d'abaissement hydraulique.

8. Dispositif selon l'une quelconque des revendications précédentes,
**caractérisé en ce que**
le poinçon (2) et/ou le moule intermédiaire (3) peut/peuvent être arrêté(s) dans plusieurs positions intermédiaires.

9. Dispositif selon l'une quelconque des revendications précédentes,
**caractérisé en ce que**
l'arête périphérique (14) présente un parcours rectangulaire vue de dessus, un, deux ou trois côtés de l'arête périphérique étant surélevés par rapport à un ou aux autres côtés de l'arête périphérique.

10. Procédé de fabrication d'une pièce moulée, constituée au moins d'une partie composite et d'une couche décor, en particulier avec un dispositif selon l'une quelconque des revendications précédentes, comportant les étapes suivantes :
• étalement de la couche décor au-dessus du moule,
• positionnement de la matière composite sur ou dans le moule intermédiaire,
• abaissement d'un poinçon sur la matière composite, celle-ci se déplaçant en direction de la couche décor et subissant une déformation dans les zones marginales à l'intérieur du moule intermédiaire, et
• autre rapprochement de la matière composite vers la couche décor grâce à un autre abaissement du poinçon avec détachement simultané des zones marginales de la matière composite d'une zone centrale à l'intérieur du moule intermédiaire,
**caractérisé par**
la poursuite de l'abaissement du poinçon (2) tout en détachant la couche décor (18) uniquement le long d'un segment périphérique de l'arête de poinçon (9).

11. Procédé selon la revendication 10,
**caractérisé en ce que**
la découpe de la couche décor (18) a lieu entre un segment périphérique de l'arête du poinçon (9) et un segment d'arête périphérique supérieur (16) d'un moule.

12. Procédé selon l'une quelconque des revendications 10 ou 11
**caractérisé en ce que**
le mouvement descendant du poinçon (2) est arrêté avant que la couche décor (18) ne soit découpée du poinçon (2) le long de l'arête périphérique (9) entière.

13. Procédé selon l'une quelconque des revendications 10 à 12,
**caractérisé en ce que**
la couche décor (18) n'est pas touchée par le segment périphérique de l'arête du poinçon (9) qui ne découpe pas la couche décor (18).

14. Procédé selon l'une quelconque des revendications 10 à 13,
**caractérisé en ce qu'**
une pression de 20 bars maximum est appliquée à la matière composite (20) au moins sous un évidement (11) dans le poinçon (2).

15. Procédé selon l'une quelconque des revendications 10 à 14,
**caractérisé en ce qu'**
une couche de non-tissé (24) ou une couche décor est déposée sur la matière composite avant l'abaissement du poinçon (2).

16. Procédé selon l'une quelconque des revendications 10 à 15,
**caractérisé en ce qu'**
on utilise une matière composite (20) qui présente une couche centrale (21) ayant une structure cellulaire, une couche de renfort (22) étant prévue sur au moins un côté de la couche centrale, de préférence des deux côtés opposés.

17. Procédé selon l'une quelconque des revendications 10 à 16,
**caractérisé en ce que**
pour la couche de renfort (22, 23) et/ou la couche centrale (21), on utilise une matière thermoplastique qui est chauffée, avant le positionnement, à environ 170 °C à 180 °C.

18. Procédé selon l'une quelconque des revendications 10 à 17,
**caractérisé en ce que**
la partie (28) de la couche décor (18) dépassant sur le côté de la matière composite (20) est repliée au moins en partie autour de la matière composite (20).

19. Procédé selon l'une quelconque des revendications 10 à 18,
**caractérisé en ce qu'**
on utilise une couche centrale (21) qui présente une structure alvéolaire, une structure en mouse ou bien une structure réticulaire.
